# EUROPÄISCHE PATENTSCHRIFT

(11) **EP 2 990 235 B1**
(45) Veröffentlichungstag und Bekanntmachung des Hinweises auf die Patenterteilung: **07.08.2019**
(21) Anmeldenummer: 15171081.1
(22) Anmeldetag: 09.06.2015
(51) Int. Cl.: B60C 11/04, B60C 11/13, B60C 11/03

(54) **FAHRZEUGLUFTREIFEN**
PNEUMATIC TYRES FOR A VEHICLE
PNEUMATIQUES DE VEHICULE

(30) Priorität: 27.08.2014 DE 202014006967 U
(43) Veröffentlichungstag der Anmeldung: 02.03.2016
(73) Patentinhaber: Continental Reifen Deutschland GmbH, 30165 Hannover (DE)
(72) Erfinder: Kristen, Florian, 30165 Hannover (DE); Lutz, Andre, 30167 Hannover (DE)
(74) Vertreter: Finger, Karsten

(56) Entgegenhaltungen:
- EP-A1- 0 598 300
- EP-A1- 1 992 505
- US-A- 4 515 197
- US-A- 4 945 966

## Beschreibung

Die Erfindung betrifft einen Fahrzeugluftreifen, insbesondere für Nutzfahrzeuge, mit einem Laufstreifen mit mindestens fünf Umfangsrippen - zumindest einer zentralen Umfangsrippe, zwei mittleren Umfangsrippen und zwei schulterseitigen Umfangsrippen - die voneinander durch Umfangsrillen getrennt sind, die eine Tiefe aufweisen, die der maximal vorgesehenen Profiltiefe entspricht, wobei in der zentralen Umfangsrippe und den mittleren Umfangsrippen seichte Vertiefungen ausgebildet sind, die eine Tiefe von 1 mm bis 4 mm und zumindest abschnittsweise eine Breite von mindestens 5 mm aufweisen und deren Böden mit einer Vielzahl von jeweils parallel zueinander verlaufenden radialen Erhebungen versehen sind, die sich höchstens bis zum Niveau der Laufstreifenaußenfläche erstrecken, wobei die Vertiefungen Abschnitte aufweisen, die in Umfangsrillen münden.

Ein derartiger Nutzfahrzeugreifen ist beispielsweise aus der EP 1 992 505 B1 bekannt, wobei der Laufstreifen dieses Reifens eine zentrale Umfangsrippe aufweist. Die in der zentrale Umfangsrippe und den beiden mittleren Umfangsrippen ausgebildeten Vertiefungen sind jeweils übereinstimmend ausgebildet und weisen jeweils drei Abschnitte auf, zwei äußere, in Querrichtung verlaufende Abschnitte, die jeweils in eine Umfangsrille münden und einen zwischen diesen angeordneten mittleren Abschnitt, welcher unter einem spitzen Winkel zur Querrichtung verläuft, der längste der drei Abschnitte ist und mit rippenartigen Erhebungen bedeckt ist. Die Vertiefungen in der zentralen Umfangsrippe und den mittleren Umfangsrippen sollen in Verbindung mit den Erhebungen dem Reifen einen guten Bodenkontakt bei verbesserter Traktionswirkung verleihen.

Aus der EP 0 598 300 A1 ist ein Nutzfahrzeugreifen bekannt, dessen Laufstreifen drei durch zickzackförmig verlaufende Umfangsrillen voneinander getrennte Umfangsrippen - zwei mittlere Umfangsrippen und zwei schulterseitige Umfangsrippen - aufweist. Die beiden mittleren Umfangsrippen sind durch Querrillen blockartig strukturiert, welche jeweils einen mittleren schmalen Abschnitt und zwei jeweils in eine Umfangsrille einmündende Abschnitte aufweisen, wobei diese Abschnitte in Richtung zu den Umfangsrillen breiter werden.

Die US 4 515 197 A offenbart einen Schwerlastreifen mit einem Laufstreifen mit mindestens vier Umfangsrippen, welche voneinander durch zickzackförmig verlaufende Umfangsrillen getrennt sind. In den mittleren Umfangsrippen sind Querrillen vorgesehen, welche die Umfangsrippen durchqueren oder in diesen sacknutartig enden. Die Querrillen sind im Querschnitt trichterförmig ausgeführt und können ferner eine sich über ihren Verlauf ändernde Tiefe aufweisen. Aus der US 4 945 966 A ist ein weiterer Schwerlastreifen bekannt, dessen Laufstreifen drei mittlere und zwei schulterseitige Umfangsrippen aufweist. Die entlang des Reifenäquators verlaufende Umfangsrippe ist im Wesentlichen als unstrukturiertes Laufstreifenband ausgeführt. In den an diese seitlich anschließenden Umfangsrippen sind paarweise verlaufende schmale Rillen ausgebildet, welche die Umfangsrippen durchqueren. Zwischen diesen Rillen ist jeweils ein schmales stegartiges Profilpositiv vorhanden, dessen Außenfläche sich knapp radial innerhalb der Laufstreifenaußenfläche befindet.

Insbesondere bei Trailerreifen, die einen Laufstreifen der eingangs genannten Art aufweisen, ist eine Verbesserung der Nässeperformance und der Traktion erwünscht aber schwierig, da diese Reifentypen praktisch ausschließlich als reine "Rippenreifen" ausgeführt werden und keine Blockstrukturen im Laufstreifen besitzen, da ihr Rollwiderstand möglichst niedrig sein soll.

Der Erfindung liegt somit die Aufgabe zugrunde, einen insbesondere für einen Einsatz als Trailerreifen geeigneten Nutzfahrzeugreifen der eingangs genannten Art zur Verfügung zu stellen, der eine verbesserte Nässeperformance und eine verbesserte Traktion bei geringem Rollwiderstand aufweist.

Gelöst wird die gestellte Aufgabe erfindungsgemäß dadurch, dass die Böden sämtlicher Vertiefungen komplett mit den rippenartigen Erhebungen bedeckt bzw. versehen sind, wobei die in den mittleren Umfangsrippen ausgebildeten Vertiefungen eine Breite aufweisen, die Richtung Profilaußenseite geringer wird und wobei die in die die zumindest eine zentrale Umfangsrippe begrenzenden Umfangsrillen einmündenden Abschnitte der Vertiefungen auf um bis zu 2,5 mm in die Umfangsrillen hinein ragenden Vorsprüngen enden.

Die Traktions- und die Nässeperformance des Reifens werden einerseits durch die Maßnahme, die Vertiefungen komplett mit Erhebungen zu bedecken, und andererseits durch die Maßnahme, in den Umfangsrillen, die die zentrale Umfangsrippe begrenzen, Vorsprünge vorzusehen, welche eine Verlängerung der Vertiefungen bewirken, verbessert. Für den Rollwiderstand ist es günstig, dass die Vertiefungen in den mittleren Umfangsrippen in Richtung zu den laufstreifenäußeren Umfangsrillen schmäler werden.

Wie bereits erwähnt, sind erfindungsgemäß ausgeführte Nutzfahrzeugreifen vor allem für einen Einsatz als Trailerreifen auf Nutzfahrzeugen geeignet. Weitere erfindungsgemäße Ausgestaltungen sind für diesen Einsatzzweck besonders vorteilhaft und begünstigen einen kurzen Bremsweg, die bereits erwähnten verbesserten Nässeeigenschaften und einen geringen Rollwiderstand. In diesem Zusammenhang ist es vor allem von Vorteil, wenn die in der zentralen Umfangsrippe verlaufenden Vertiefungen jeweils drei Abschnitte aufweisen, wobei der mittlere Abschnitt die größte Erstreckung besitzt und unter einem Winkel von 40° bis 70° zur Querrichtung des Laufstreifens verläuft und wenn diese Vertiefungen eine in sämtlichen Abschnitten im Wesentlichen gleich große Breite von 10 mm bis 25 mm aufweisen.

Für einen geringen Rollwiderstand des Reifens sind vor allem die in den mittleren Umfangsrippen auf besondere Weise ausgeführten Vertiefungen maßgebend, wobei auch diese Vertiefungen drei Abschnitte aufweisen und zu einer verbesserten Traktion beitragen, da jeweils der laufstreifeninnenseitig in die die zentrale Umfangsrippe begrenzenden Umfangsrillen mündende Abschnitt ebenfalls auf einem in diese Umfangsrillen hinein ragenden Vorsprung endet. Dieser Abschnitt weist ferner vorteilhafterweise eine Breite auf, die im Wesentlichen der Breite der Vertiefungen in der zentralen Umfangsrippe entspricht.

Für einen geringen Rollwiderstand ist es günstig, wenn die weiter laufstreifenaußenseitig gelegenen Umfangsrippen, zu diesen gehören die mittleren Umfangsrippen und die schulterseitigen Umfangsrippen, geringer strukturiert sind als die zentrale Umfangsrippe. Es ist daher auch vorteilhaft, wenn der laufstreifenaußenseitig in eine Umfangsrille mündende Abschnitt der in den mittleren Umfangsrippen verlaufenden Vertiefungen die geringste Breite von allen Abschnitten dieser Vertiefungen aufweist, wobei der mittlere Abschnitt eine Breite aufweist, die kontinuierlich von der Breite des laufstreifeninnenseitigen Abschnittes auf die Breite des laufstreifenaußenseitigen Abschnittes abnimmt.

Weitere Merkmale, Vorteile und Einzelheiten der Erfindung werden nun anhand der Zeichnung, die ein Ausführungsbeispiel darstellt, näher erläutert. Dabei zeigen
Fig. 1 eine Draufsicht auf einen Ausschnitt eines Laufstreifens für Nutzfahrzeugreifen,
Fig. 1a eine Draufsicht auf einen weiteren Ausschnitt des Laufstreifens und
Fig. 2 eine Schrägansicht des Ausschnittes des Laufstreifens aus Fig. 1.

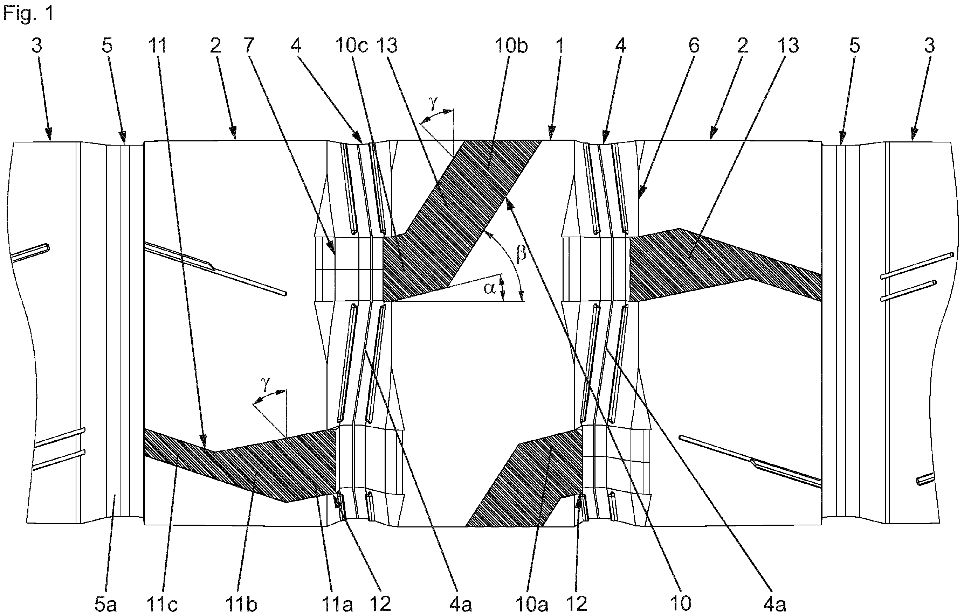

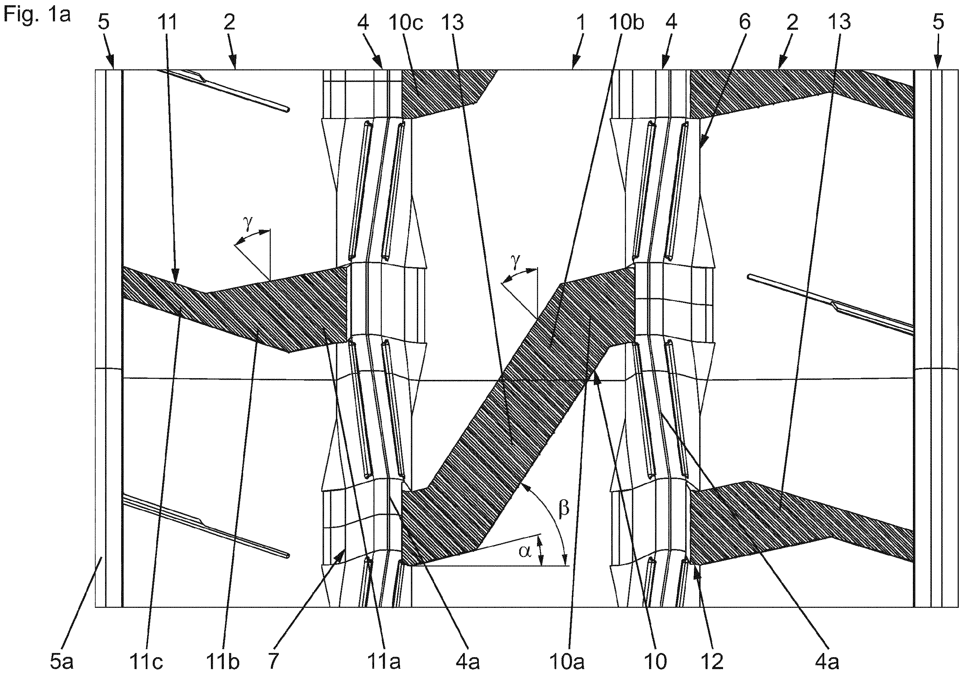

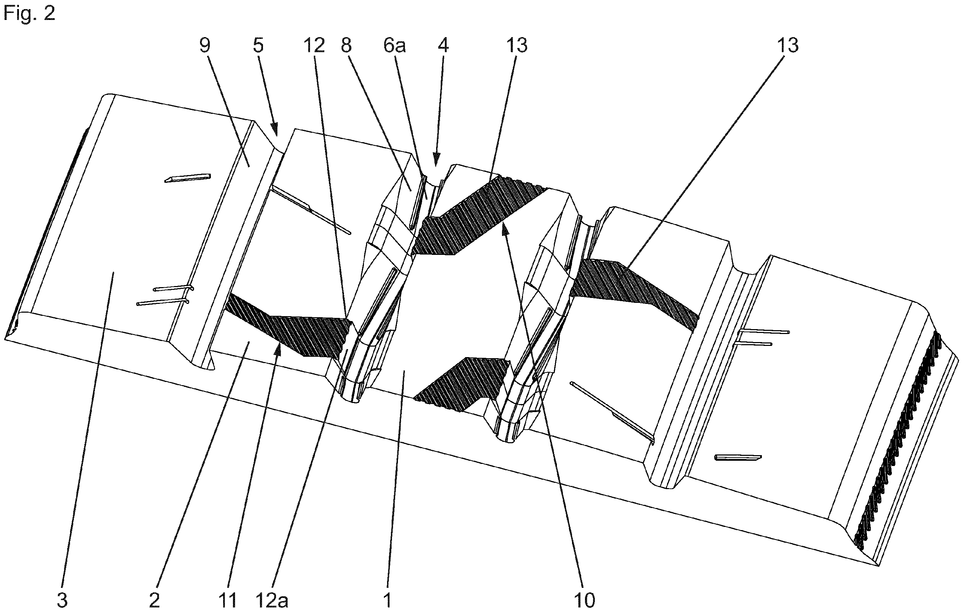

Die Figuren 1, 1a und 2 zeigen den profilierten Laufstreifen eines Fahrzeugreifens mit fünf sich über den Umfang des Laufstreifens erstreckenden Umfangsrippen 1, 2 und 3, wobei eine zentrale, entlang des Reifenäquators verlaufende Umfangsrippe 1, zwei mittlere Umfangsrippen 2 und zwei schulterseitige Umfangsrippen 3, welche nur in Fig. 2 komplett dargestellt sind, vorgesehen sind. Die Umfangsrippen 1, 2, 3 sind voneinander durch breite, in Umfangsrichtung umlaufende Umfangsrillen 4, 5 getrennt, wobei die Umfangsrillen 4 die zentrale Umfangsrippe 1 von den mittleren Umfangsrippen 2 und die beiden Umfangsrillen 5 die mittleren Umfangsrippen 2 von den schulterseitigen Umfangsrippen 3 trennen. Die Umfangsrillen 5 sind beim gezeigten Ausführungsbeispiel gerade verlaufende Umfangsrillen, die Umfangsrillen 4 weisen in Zickzackform in Umfangsrichtung verlaufende Rillenabschnitte 6 auf, zwischen welchen jeweils ein kurzer, in Umfangsrichtung orientierter Rillenabschnitt 7 verläuft. Die Umfangsrillen 4 weisen jeweils einen Rillengrund 4a auf, dessen Verlauf jenem der Rillenabschnitte 6 und 7 folgt, die Umfangsrillen 5 weisen einen gerade in Umfangsrichtung verlaufenden Rillengrund 5a auf. Die Umfangsrillen 4 sind in ihren zickzackförmig verlaufenden Rillenabschnitten 6 von Rippenflanken 8 (Fig. 2) begrenzt, die unter einem Winkel, welcher insbesondere 3° bis 10° beträgt, zur radialen Richtung verlaufen, derart, dass die Rillenbreite zur Laufstreifenaußenfläche zu größer wird. Auf analoge Weise sind die Rippenflanken 9 (Fig. 2) der Umfangsrillen 5 zur radialen Richtung geneigt.

Bei neuem Reifen weisen die Umfangsrillen 4, 5 eine Rillentiefe auf, die der spezifischen Profiltiefe des Reifens entspricht und in radialer Richtung zwischen der tiefsten Stelle des Rillengrundes 4a, 5a und der Laufstreifenaußenfläche ermittelt wird. Die Profiltiefe beträgt bei erfindungsgemäßen Nutzfahrzeugreifen 8 mm bis 25 mm.

Die schulterseitigen Umfangsrippen 3 sind kaum bzw. wenig profiliert. In der zentralen Umfangsrippe 1 und den mittleren Umfangsrippen 2 sind seichte Vertiefungen 10 bzw. 11 ausgebildet, die jeweils, wie noch beschrieben wird, die Umfangsrippen 1 und 2 durchqueren. Die in radialer Richtung ermittelte Tiefe der Vertiefungen beträgt 1 mm bis 4 mm, insbesondere etwa 2 mm. Die in der zentralen Umfangsrippe 1 ausgebildeten seichten Vertiefungen 10 verlaufen parallel zueinander und weisen drei Abschnitte 10a, 10b und 10c auf, deren Breite zumindest im Wesentlichen gleich groß ist und 10 mm bis 25 mm beträgt. Die Abschnitte 10a und 10c gehen über Knickstellen in den mittleren Abschnitt 10b über und verlaufen dabei unter einem Winkel α von einigen wenigen Grad zur Querrichtung (axialen Richtung), insbesondere beträgt α 0° bis 15°. Auf die außenseitigen Knickstellen zwischen den Abschnitten 10a und 10c und den mittleren Abschnitt 10b bezogen erstrecken sich die Abschnitte 10a und 10c in axialer Richtung über 10 % bis 40 % der Rippenbreite, die in axialer Richtung an der breitesten Stelle der Umfangsrippe 1 ermittelt wird. Die Abschnitte 10a und 10c münden an Rillenabschnitten 7 in die Umfangsrillen 4, ihre Breite entspricht der Umfangserstreckung der Rillenabschnitte 7. Der mittlere Abschnitt 10b der Vertiefungen 10 verläuft unter einem Winkel β, welcher 40° bis 70° beträgt, zur Querrichtung. Nachdem die Umfangsrillen 4 parallel zueinander verlaufen und die Abschnitte 10a und 10c jeweils an den Rillenabschnitten 7 im Bereich der in die Umfangsrippe 1 hineinversetzten Rillenabschnitt 7 münden, ergibt sich eine Umfangserstreckung der mittleren Abschnitte 10c, die mit der Umfangserstreckung der Rillenabschnitte 6 korreliert.

Die Abschnitte 10a und 10c münden in die Umfangsrillen 4 jeweils an bzw. mit Vorsprüngen 12, die sich um mindestens 1 mm und bis zu 2,5 mm in die Umfangsrillen 4 erstrecken, wobei die Vorsprünge 12 die Rillenabschnitte 7 mitbilden, insbesondere durch eine im Wesentlichen in radialer Richtung verlaufende Flanke 12a (Fig. 2).

Die in den Umfangsrippen 2 ausgebildeten Vertiefungen 11 gehen von den Rillenabschnitten 6 der Umfangsrillen 4 aus, die sich zwischen jenen Rillenabschnitten 6 befinden, in welche die Vertiefungen 10 einmünden, verlaufen im Wesentlichen in axialer Richtung und setzen sich aus drei Abschnitten 11a, 11b und 11c zusammen. Die beiden Abschnitte 11a und 11c verlaufen zueinander flach V-förmig, wobei die, bezogen auf die V-Form, innenseitige Kante des Abschnittes 11a und die, bezogen auf die V-Form, außenseitige Kante des Abschnittes 11c verlängert sind und zwischen diesen Verlängerungen der Abschnitt 11b gebildet ist. Der Abschnitt 11a, welcher analog zu den Abschnitten 10a und 10b der Vertiefungen 10 an einem Vorsprung 12 in die Umfangsrille 4 mündet, weist eine Breite auf, die an die Umfangserstreckung des Rillenabschnittes 6 angepasst ist. Die in die Umfangsrillen 5 mündenden Abschnitte 11c weisen eine geringere Breite von 3 mm bis 8 mm auf. Durch die unterschiedlichen Breiten der Abschnitte 11a und 11c weist der mittlere Abschnitt 11b eine Breite auf, die ausgehend vom Abschnitt 11a in Richtung des Abschnittes 11c kontinuierlich abnimmt. Die Abschnitte 11c münden ohne das Ausbilden gesonderter Vorsprünge in die Umfangsrillen 5.

Die Böden der Vertiefungen 10, 11 sind jeweils von einer Vielzahl parallel zueinander verlaufender rippenartiger Erhebungen 13 bedeckt. Die Erhebungen 13 erstrecken sich in radialer Richtung maximal bis zur Außenfläche des Laufstreifens und daher höchstens über die gesamte Tiefe der Vertiefungen 10, 11, ihre Höhe entspricht daher höchstens der Tiefe der Vertiefungen 10, 11. Die Erhebungen 13 schließen mit der Umfangsrichtung einen Winkel γ ein, welcher 20° bis 55° beträgt. Bei einer bevorzugten Ausführungsform der Erfindung sind sämtliche rippenartigen Erhebungen 13 in den Vertiefungen 10, 11 unter einem gleich großen Winkel γ gegenüber der Umfangsrichtung geneigt. Insbesondere ist der Winkel γ in sämtlichen Vertiefungen 10 und in sämtlichen Vertiefungen 11 jeweils gleich groß. Die rippenartigen Erhebungen 13 weisen eine Breite an ihrer Basis auf, die 0,5 mm bis 2 mm beträgt, sie können unter einem gegenseitigen Abstand angeordnet sein, der ebenfalls 0,5 mm bis 2 mm beträgt. Die rippenartigen Erhebungen 13 werden bevorzugt im Querschnitt gerundet ausgeführt.

Die seichten, mit einer Vielzahl von Erhebungen 13 bedeckten Vertiefungen 10, 11 wirken sich positiv auf die Traktionseigenschaften und die Nässeperformance des Reifens aus. Für den Rollwiderstand des Reifens ist es vor allem vorteilhaft, dass die in der zentralen Umfangsrippe 1 ausgebildeten Vertiefungen 10 relativ breit sind und die in den mittleren Umfangsrippen 2 ausgebildeten Vertiefungen 11 eine Breite aufweisen, die in den laufstreifenaußenseitig verlaufenden Abschnitten 11c geringer ist als in den laufstreifeninnenseitig verlaufenden Abschnitten 11a.

Die Erfindung ist auf das dargestellte und beschriebene Ausführungsbeispiel nicht eingeschränkt. Insbesondere können erfindungsgemäß ausgeführte Reifen mehr als fünf Umfangsrippen aufweisen, sodass beispielsweise zwei zentrale Umfangsrippen vorgesehen sind.

### Bezugsziffernliste

- 1: Umfangsrippe
- 2: Umfangsrippe
- 3: Umfangsrippe
- 4: Umfangsrille
- 4a: Rillengrund
- 5: Umfangsrille
- 5a: Rillengrund
- 6: Rillenabschnitt
- 7: Rillenabschnitt
- 8: Rippenflanke
- 9: Rippenflanke
- 10: Vertiefung
- 10a, 10b, 10c: Abschnitt
- 11: Vertiefung
- 11a, 11b, 11c: Abschnitt
- 12: Vorsprünge
- 12a: Flanke
- 13: Erhebung
- α: Winkel
- β: Winkel
- γ: Winkel

## Patentansprüche

1. Fahrzeugluftreifen, insbesondere für Nutzfahrzeuge, mit einem Laufstreifen mit mindestens fünf Umfangsrippen (1, 2, 3) - zumindest einer zentralen Umfangsrippe (1), zwei mittleren Umfangsrippen (2) und zwei schulterseitigen Umfangsrippen (3) - die voneinander durch Umfangsrillen (4, 5) getrennt sind, die eine Tiefe aufweisen, die der maximal vorgesehenen Profiltiefe entspricht, wobei in der zumindest einen zentralen Umfangsrippe (1) und den mittleren Umfangsrippen (2) seichte Vertiefungen (10, 11) ausgebildet sind, die eine Tiefe von 1 mm bis 4 mm und zumindest abschnittsweise eine Breite von mindestens 5 mm aufweisen und deren Böden mit einer Vielzahl von jeweils parallel zueinander verlaufenden radialen Erhebungen (13) versehen sind, die sich höchstens bis zum Niveau der Laufstreifenaußenfläche erstrecken, wobei die Vertiefungen (10, 11) Abschnitte aufweisen (10a, 10b, 10c, 11a, 11b, 11c), die in Umfangsrillen (4, 5) münden,
**dadurchgekennzeichnet,**
dass die Böden sämtlicher Vertiefungen (10, 11) komplett mit den rippenartigen Erhebungen (13) bedeckt bzw. versehen sind, wobei die in den mittleren Umfangsrippen (2) ausgebildeten Vertiefungen (11) eine Breite aufweisen, die Richtung Profilaußenseite geringer wird, und wobei die in die die zumindest eine zentrale Umfangsrippe (1) begrenzenden Umfangsrillen (4) einmündenden Abschnitte (10a, 10c, 11a) der Vertiefungen (10, 11) auf um bis zu 2,5 mm in die Umfangsrillen (4) hinein ragenden Vorsprüngen (12) enden.

2. Fahrzeugluftreifen nach Anspruch 1, **dadurch gekennzeichnet, dass** die in der zentralen Umfangsrippe (1) verlaufenden Vertiefungen (10) jeweils drei Abschnitte (10a, 10b, 10c) aufweisen, wobei der mittlere Abschnitt (10b) die größte Erstreckung aufweist und unter einem Winkel (β) von 40° bis 70° zur Querrichtung des Laufstreifens verläuft.

3. Fahrzeugluftreifen nach Anspruch 1 oder 2, **dadurch gekennzeichnet, dass** die in der zentralen Umfangsrippe (1) verlaufenden Vertiefungen (10) eine in sämtlichen Abschnitten (10a, 10b, 10c) im Wesentlichen gleich große Breite von 10 mm bis 25 mm aufweisen.

4. Fahrzeugluftreifen nach einem der Ansprüche 1 bis 3, **dadurch gekennzeichnet, dass** die in Umfangsrillen (4) mündenden Abschnitte (10a, 10c) der Vertiefungen (10) der zentralen Umfangsrippe (1) über maximal 40 % der größten Breite der Umfangsrippe (1) verlaufen.

5. Fahrzeugluftreifen nach Anspruch 1, **dadurch gekennzeichnet, dass** die in den mittleren Umfangsrippen (2) verlaufenden Vertiefungen (11) drei Abschnitte (11a, 11b, 11c) aufweisen, wobei die in die die zentrale Umfangsrippe (1) begrenzenden Umfangsrillen (4) mündenden Abschnitte (11a) eine Breite aufweisen, die im Wesentlichen der Breite der Vertiefungen (10) der zentralen Umfangsrippe (1) entspricht.

6. Fahrzeugluftreifen nach Anspruch 1 oder 5, **dadurch gekennzeichnet, dass** die in die die mittleren Umfangsrippen (2) laufstreifenaußenseitig begrenzenden Umfangsrillen (5) mündenden Abschnitte (11c) der in den mittleren Umfangsrippen (2) verlaufenden Vertiefungen (11) die geringste Breite von allen Abschnitten (11a, 11b, 11c) aufweisen.

7. Fahrzeugluftreifen nach Anspruch 1, 5 oder 6, **dadurch gekennzeichnet, dass** die mittleren Abschnitte (11c) der in den mittleren Umfangsrippen (2) verlaufenden Vertiefungen (11) eine Breite aufweisen, die kontinuierlich von der Breite des laufstreifeninnenseitigen Abschnittes (11a) auf die Breite des laufstreifenaußenseitigen Abschnittes (11c) abnimmt.

## Claims

1. Pneumatic vehicle tyre, in particular for commercial vehicles, comprising a tread rubber with at least five circumferential ribs (1, 2, 3) - at least one central circumferential rib (1), two middle circumferential ribs (2) and two shoulder-side circumferential ribs (3) - which are separated from one another by circumferential grooves (4, 5), which have a depth that corresponds to the profile depth provided as a maximum, wherein in the at least one central circumferential rib (1) and the middle circumferential ribs (2) there are formed shallow depressions (10, 11), which have a depth of 1 mm to 4 mm and at least in certain portions a width of at least 5 mm and the bottoms of which are provided with a multiplicity of radial elevations (13), which in each case run parallel to one another and extend at most up to the level of the outer surface of the tread rubber, wherein the depressions (10, 11) have portions (10a, 10b, 10c, 11a, 11b, 11c) which open out into circumferential grooves (4, 5),
**characterized**
**in that** the bottoms of all the depressions (10, 11) are completely covered or provided with the rib-like elevations (13), wherein the depressions (11) formed in the middle circumferential ribs (2) have a width that becomes smaller in the direction of the outer side of the profile, and wherein the portions (10a, 10c, 11a) of the depressions (10, 11) that open out into the circumferential grooves (4) delimiting at least one central circumferential rib (1) end on projections (12) protruding into the circumferential grooves (4) by up to 2.5 mm.

2. Pneumatic vehicle tyre according to Claim 1, **characterized in that** the depressions (10) running in the central circumferential rib (1) have in each case three portions (10a, 10b, 10c), wherein the middle portion (10b) has the greatest extent and runs at an angle (β) of 40° to 70° in relation to the transverse direction of the tread rubber.

3. Pneumatic vehicle tyre according to Claim 1 or 2, **characterized in that** the depressions (10) running in the central circumferential rib (1) have a width that is substantially of the same size in all of the portions (10a, 10b, 10c) of 10 mm to 25 mm.

4. Pneumatic vehicle tyre according to one of Claims 1 to 3, **characterized in that** the portions (10a, 10c) of the depressions (10) of the central circumferential rib (1) that open out into circumferential grooves (4) run over a maximum of 40% of the greatest width of the circumferential rib (1).

5. Pneumatic vehicle tyre according to Claim 1, **characterized in that** the depressions (11) running in the middle circumferential ribs (2) have three portions (11a, 11b, 11c), wherein the portions (11a) opening out into the circumferential grooves (4) delimiting the central circumferential rib (1) have a width that corresponds substantially to the width of the depressions (10) of the central circumferential rib (1).

6. Pneumatic vehicle tyre according to Claim 1 or 5, **characterized in that** the portions (11c) of the depressions (11) running in the middle circumferential ribs (2) that open out into the circumferential grooves (5) delimiting the middle circumferential ribs (2) on the outer side of the tread rubber have the smallest width of all the portions (11a, 11b, 11c).

7. Pneumatic vehicle tyre according to Claim 1, 5 or 6, **characterized in that** the middle portions (11c) of the depressions (11) running in the middle circumferential ribs (2) have a width that decreases continuously from the width of the portion (11a) on the inner side of the tread rubber to the width of the portion (11c) on the outer side of the tread rubber.

## Revendications

1. Pneumatique de véhicule, notamment pour véhicules utilitaires, avec une bande de roulement dotée d'au moins cinq nervures périphériques (1, 2, 3) - au moins une nervure périphérique centrale (1), deux nervures périphériques médianes (2) et deux nervures périphériques (3) du côté de l'épaulement - séparées les unes des autres par des sillons périphériques (4, 5) et présentant une profondeur correspondant à la profondeur de profil maximale prévue et dans laquelle au moins une nervure périphérique centrale (1) et les nervures périphériques médianes (2) sont réalisées sous la forme de renfoncements (10, 11) peu profonds présentant une profondeur de 1 mm à 4 mm et au moins en partie une largeur d'au moins 5 mm et dont le fond respectif est pourvu d'une pluralité de bosses (13) radiales s'étendant respectivement parallèlement les unes par rapport aux autres et s'étendant tout au plus jusqu'au niveau de la surface de roulement extérieure, les renfoncements (10, 11) comportant des sections (10a, 10b, 10c, 11a, 11b, 11c) débouchant dans les sillons périphériques (4, 5) ;
**caractérisé en ce que** :
les fonds de l'ensemble des renfoncements (10, 11) sont complètement recouverts par les bosses (13) de type nervure et/ou sont pourvus de ces bosses, les renfoncements (11) réalisés dans les nervures périphériques médianes (2) présentant une largeur plus réduite dans la direction du côté extérieur de profil et les sections (10a, 10c, 11a) des renfoncements (10, 11) débouchant dans les sillons périphériques (4) délimitant l'au moins une nervure périphérique centrale (1) finissant sur les saillies (12) rentrant jusqu'à 2,5 mm dans les sillons périphériques (4).

2. Pneumatique de véhicule selon la revendication 1, **caractérisé en ce que** les renfoncements (10) s'étendant dans la nervure périphérique centrale (1) comportent respectivement trois sections (10a, 10b, 10c), la section médiane (10b) présentant la plus grande extension et s'étendant selon un angle (β) de 40° à 70° dans la direction transversale de la bande de roulement.

3. Pneumatique de véhicule selon la revendication 1 ou 2, **caractérisé en ce que** les renfoncements (10) s'étendant dans la nervure périphérique centrale (1) présentent une grande largeur pour l'essentiel identique de 10 mm à 25 mm dans l'ensemble des sections (10a, 10b, 10c).

4. Pneumatique de véhicule selon l'une quelconque des revendications 1 à 3, **caractérisé en ce que** les sections (10a, 10c) des renfoncements (10) de la nervure périphérique centrale (1) débouchant dans les sillons périphériques (4) s'étendent au maximum sur 40 % de la plus grande largeur de la nervure périphérique (1).

5. Pneumatique de véhicule selon la revendication 1, **caractérisé en ce que** les renfoncements (11) s'étendant dans les nervures périphériques médianes (2) comportent trois sections (11a, 11b, 11c), les sections (11a) débouchant dans les sillons périphériques (4) délimitant la nervure périphérique centrale (1) présentant une largeur correspondant pour l'essentiel à la largeur des renfoncements (10) de la nervure périphérique centrale (1).

6. Pneumatique de véhicule selon la revendication 1 ou 5, **caractérisé en ce que** les sections (11c) débouchant dans les sillons périphériques (5) délimitant les nervures périphériques médianes (2) du côté extérieur de bande de roulement des renfoncements (11) s'étendant dans les nervures périphériques médianes (2) présentent la largeur la plus réduite de toutes les sections (11a, 11b, 11c).

7. Pneumatique de véhicule selon la revendication 1, 5 ou 6, **caractérisé en ce que** les sections médianes (11c) des renfoncements (11) s'étendant dans les nervures périphériques médianes (2) présentent une largeur décroissant en continu depuis la largeur de la section (11a) de côté intérieur de la bande de roulement pour atteindre la largeur de la section (11c) du côté extérieur de bande de roulement.
